(19) 

Europäisches Patentamt

European Patent Office

Office européen des brevets

(11) **EP 4 770 142 A1**

(12) **EUROPEAN PATENT APPLICATION**
published in accordance with Art. 153(4) EPC

(43) Date of publication:
**01.07.2026 Bulletin 2026/27**

(21) Application number: **24870675.6**

(22) Date of filing: **24.09.2024**

(51) International Patent Classification (IPC):
**H04W 4/02** (2018.01)

(52) Cooperative Patent Classification (CPC):
**H04W 4/02; H04W 72/0446; H04W 72/0453**

(86) International application number:
**PCT/CN2024/120536**

(87) International publication number:
**WO 2025/067131 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311282030**

(71) Applicant: **HUAWEI TECHNOLOGIES CO., LTD.
Shenzhen, Guangdong 518129 (CN)**

(72) Inventors:
• **WANG, Han
  Shenzhen, Guangdong 518129 (CN)**
• **HUANG, Su
  Shenzhen, Guangdong 518129 (CN)**
• **XIA, Jinhuan
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **POSITIONING METHOD AND COMMUNICATION DEVICE**

(57) This application provides a positioning method and a communication device, and proposes the addition of second indication information. The second indication information indicates that a first device can not only measure a reference signal within a time window to determine a carrier phase measurement result, but also measure a reference signal on a time-frequency resource or a reference signal outside the time window to determine a time measurement result, so that positioning accuracy of a terminal device can be improved.

Method 800

FIG. 8

## Description

This application claims priority to Chinese Patent Application No. 202311282030.1, filed with the China National Intellectual Property Administration on September 27, 2023, and entitled "POSITIONING METHOD AND COMMUNICATION DEVICE", which is incorporated herein by reference in its entirety.

## TECHNICAL FIELD

This application relates to the communication field, and more specifically, to a positioning method and a communication device.

## BACKGROUND

Positioning methods for terminal devices include techniques based on measured time of arrival and those based on measured angle of arrival. Generally, positioning accuracy of these positioning technologies is not high. Currently, the 3rd generation partnership project (3rd generation partnership project, 3GPP) release 18 (release 18, R18) has discussed a carrier phase positioning technology. Currently, the carrier phase positioning technology is one of main high-precision positioning methods. It performs positioning by measuring variations of carrier phase of reference signals from a transmitter side to a receiver side. However, in the carrier phase positioning technology, for example, in downlink positioning, the terminal device and a reference station (positioning reference unit, PRU) need to simultaneously measure a reference signal sent by a base station, some time-varying error terms, for example, random initial phase errors and clock drifts, can be eliminated. A location management function (location management function, LMF) network element configures a time window for the terminal device and the PRU, and indicates the terminal device and the PRU to measure and report a downlink positioning reference signal resource set within the time window. In this case, the terminal device and the PRU can measure the downlink reference signal at the same time. However, the time window configured by the LMF applies to both carrier phase measurement and a time measurement quantity. In other words, a downlink time measurement quantity also needs to be measured and reported within the configured time window.

Generally, the terminal device is first coarsely positioned by using measurement time-based positioning techniques and then accurately positioned by using the carrier phase positioning technology. Generally, the LMF configures a maximum of two time windows for the terminal device and the PRU. In this case, for downlink time measurement, measurement can be performed only on resources within the maximum of two time windows. Consequently, a quantity of reference signals available for positioning is excessively small. For the measurement time-based positioning technology, a larger quantity of reference signals that can be measured indicates a larger quantity of obtained measurement quantities, and overall positioning accuracy can be improved through smoothing or weighting. Consequently, reference signals within only two time windows cause an excessively small time measurement quantity, leading to overall low positioning accuracy.

Therefore, how to improve positioning accuracy of the terminal device becomes a technical problem to be resolved.

## SUMMARY

This application provides a positioning method, and proposes addition of second indication information. The second indication information indicates that a first device can not only measure a reference signal within a time window to determine a carrier phase measurement result, but also measure a reference signal on a time-frequency resource or a reference signal outside the time window to determine a time measurement result, so that positioning accuracy of a terminal device can be improved.

According to a first aspect, a positioning method is provided. The method may be performed by an LMF network element, or may be performed by a component (for example, a chip or a circuit) of an LMF network element. This is not limited.

The method includes: sending configuration information to a first device, where the configuration information includes a time-frequency resource corresponding to a reference signal; sending first indication information and second indication information to the first device, where the first indication information indicates information about a time window for measuring the reference signal, and the second indication information indicates to measure the reference signal within the time window to determine a carrier phase measurement result; receiving the carrier phase measurement result and a time measurement result that are reported by the first device, where the time measurement result is determined by measuring the reference signal on the time-frequency resource; and determining a location of a terminal device based on the carrier phase measurement result and the time measurement result.

It should be understood that a quantity of reference signals on a time-frequency resource is usually greater than a quantity of reference signals configured within a time window. Therefore, a quantity of reference signals on the time-frequency resource that are measured by the first device is greater than a quantity of reference signal measured only within the time window, so that the finally determined time measurement result is more accurate, and positioning accuracy of the terminal device is higher.

In other words, in this application, in the method, the time measurement result is irrelevant to the time window. For example, the reference signal measured within the time window is used only to determine the carrier phase measurement result. For example, specific reference signals that are to be measured to determine the time measurement result may have been predetermined in a protocol in advance. For example, the terminal device selects a reference signal on a configured time-frequency resource, and then measures the selected reference signal, to determine the time measurement result.

In a possible implementation, the second indication information further indicates to measure the reference signal on the time-frequency resource to determine the time measurement result.

Based on the foregoing technical manner, in this application, the carrier phase measurement result may be decoupled from the time measurement result, and the time measurement result is irrelevant to the configured time window. In other words, the first device may measure a reference signal on a time-frequency resource within or outside the time window, to determine the time measurement result, and the time measurement result is related to the configured time-frequency resource. In this way, a quantity of reference signals used to determine the time measurement result increases, so that positioning accuracy in a carrier phase positioning technology can be ensured, and positioning accuracy in a measurement time-based positioning technology can also be ensured, thereby improving overall positioning accuracy of the terminal device.

Alternatively, the method includes: sending configuration information to a first device, where the configuration information includes a time-frequency resource corresponding to a reference signal; sending first indication information and second indication information to the first device, where the first indication information indicates information about a time window for measuring the reference signal, and the second indication information indicates to preferentially measure the reference signal within the time window; receiving a carrier phase measurement result and a time measurement result that are reported by the first device, where the carrier phase measurement result and the time measurement result are determined by measuring a reference signal within the time window and a reference signal outside the time window; and determining a location of a terminal device based on the carrier phase measurement result and the time measurement result.

It should be understood that, in this application, because the first device may measure both the reference signal within the time window and the reference signal outside the time window, a quantity of measured reference signals is greater than a quantity of reference signals measured only within the time window, and the finally determined time measurement result is more accurate, thereby improving overall positioning accuracy of the terminal device.

In other words, in this application, the reference signal that is within the time window and that is preferentially measured may be used only to determine the carrier phase measurement result, and the time measurement result may be determined based on the reference signal measured outside the time window. Alternatively, the reference signal that is within the time window and that is preferentially measured may be used to determine the carrier phase measurement result and the time measurement result, and the reference signal measured outside the time window may also be used to determine the time measurement result.

In a possible implementation, the method further includes: sending third indication information to the first device, where the third indication information indicates priorities of different resources in measurement of the reference signal within the time window, and/or the third indication information indicates priorities of different resources in measurement of the reference signal outside the time window.

In this application, in a possible implementation, the carrier phase measurement result is determined based on the reference signal measured within the time window, and the time measurement result is determined by measuring the reference signal within the time window and the reference signal outside the time window.

In this application, in another possible implementation, the carrier phase measurement result is determined based on the reference signal measured within the time window, and the time measurement result is determined by measuring the reference signal outside the time window.

The "different resources" may be understood as time-frequency resources corresponding to the reference signal, including a symbol, a slot, a frame, or the like in which the reference signal is located. This is not limited.

In a possible implementation, the method includes: sending third indication information to the first device, where the third indication information indicates an identifier of a reference signal resource and/or an identifier of a reference signal resource set that are/is measured in measurement of the reference signal within the time window, and/or the third indication information indicates an identifier of a reference signal resource and/or an identifier of a reference signal resource set that are/is measured in measurement of the reference signal outside the time window.

Based on the foregoing implementation, in this application, the first device may measure both the reference signal within the time window and the reference signal outside the time window. A quantity of measured reference signals is greater than a quantity of reference signals measured only within the time window, so that the finally determined time measurement result is more accurate, and positioning accuracy of the terminal device is higher.

Optionally, the method further includes: obtaining the configuration information of the reference signal.

In this application, the configuration information of the reference signal includes, for example, one or more of the following: a type or type set of the reference signal, resource information of the reference signal, a sequence of the reference signal, a subcarrier spacing of the reference signal, power of the reference signal, and a measurement request indication of the reference signal. The "type or type set of the reference signal" includes, for example, a zero-power-type reference signal and/or a non-zero-power-type reference signal. The "resource information of the reference signal" may include, for example, at least one of the following: a reference signal resource set, a time domain resource start location, an interval or a periodicity between time domain resources, a symbol location, a symbol location set, a time domain pattern, time domain time window information, a frequency domain resource start location, a frequency domain resource size, an interval or a periodicity between frequency domain resources, a frequency domain pattern, an index of a correspondence between a symbol and a frequency domain pattern, a port index, a beam (beam) index, and a basic time-frequency pattern or pattern index. Specifically, for information included in the configuration information of the reference signal, refer to technical specifications (technology specification, TS) 37.355 (which describes PRS configurations) and TS 38.455 (which describes SRS configurations). Details are not described in this application.

In this application, in a possible implementation, the first indication information and the second indication information may be carried in a same message. For example, the first indication information and the second indication information may be carried in measurement request information. In this case, it is equivalent to that the first indication information and the second indication information are simultaneously delivered. In another possible implementation, the first information and the second information are different information. For example, the first indication information is carried in a measurement request message, and the second indication information may be carried in an assistance message (which may also be referred to as a "positioning assistance message").

In this application, the second indication information may be indication information of "1" bit.

In this application, the reference signal may include, for example, a reference signal resource and a reference signal resource set. For example, the reference signal resource may include a sounding reference signal SRS resource and/or a positioning reference signal resource. For example, the reference signal resource set may include a sounding reference signal SRS resource set and/or a positioning reference signal PRS resource set. For example, in a downlink positioning scenario, the reference signal may be understood as the PRS resource set. For example, in an uplink positioning scenario, the reference signal resource may be understood as the SRS resource.

In this application, the carrier phase measurement result includes a reference signal resource set carrier phase RSCP and/or a reference signal resource set carrier phase difference RSCPD; and the time measurement result includes at least one of the following: a relative time of arrival RTOA, a reference signal time difference of arrival RSTD, a receive-transmit time difference (Rx-Tx time difference) of the terminal device, and a receive-transmit time difference (Rx-Tx time difference) of a base station.

In this application, the LMF may determine information about a time window based on the configuration information. The "information about the time window" includes at least one of the following: a start location of the time window, a length of the time window, a start resource location of a reference signal within the time window, an interval between reference signal resources within the time window, and the like. It should be understood that the "time window" configured by the LMF belongs to the time-frequency resource, or it may be understood as that a part of the time-frequency resource is the time window.

In this application, in the downlink positioning scenario, the first device may be understood as a terminal device and a PRU. In the uplink positioning scenario, the first device may be understood as various base stations participating in positioning. It can be learned from the foregoing description that there are typically a plurality of base stations participating in positioning, and in typical scenarios, three base stations would participate in positioning of a terminal device.

Alternatively, the method includes: sending configuration information to a first device, where the configuration information includes a time-frequency resource corresponding to a reference signal; sending first indication information and second indication information to the first device, where the first indication information indicates information about a time window for measuring the reference signal, and the second indication information indicates to measure the reference signal within the time window to determine a carrier phase measurement result; receiving the carrier phase measurement result or a time measurement result reported by the first device, where the time measurement result is determined by measuring the reference signal on the time-frequency resource; and determining a location of the terminal device based on the carrier phase measurement result or the time measurement result.

Alternatively, the method includes: sending configuration information to a first device, where the configuration information includes a time-frequency resource corresponding to a reference signal; sending first indication information and second indication information to the first device, where the first indication information indicates information about a time window for measuring the reference signal, and the second indication information indicates to preferentially measure the reference signal within the time window; receiving a carrier phase measurement result or a time measurement result reported by the first device, where the carrier phase measurement result or the time measurement result is determined by measuring a reference signal within the time window and a reference signal outside the time window; and determining a location of the terminal device based on the carrier phase measurement result or the time measurement result.

It may also be understood as that, in this application, a bit indicator (for example, the second indication information) may be added to indicate whether measurement within an indicated time window is performed only for a RSCP/RCPD (for example, the carrier phase measurement result), or whether a UE and a PRU can measure a downlink (downlink, DL) PRS resource set outside an indicated time period.

Based on the foregoing technical solution, in this application, the carrier phase measurement result or the time measurement result may be flexibly determined through the second indication information, to determine the location of the terminal device.

According to a second aspect, a positioning method is provided. The method may be performed by a first device, or may be performed by a component (for example, a chip or a circuit) of the first device. This is not limited.

For beneficial effects implemented by the method in the second aspect, refer to related descriptions of the first aspect. Details are not described again.

The method includes: receiving configuration information from a location management function network element, where the configuration information includes a time-frequency resource corresponding to a reference signal; receiving first indication information and second indication information from the location management function network element, where the first indication information indicates information about a time window for measuring the reference signal, and the second indication information indicates to measure the reference signal within the time window to determine a carrier phase measurement result; measuring the reference signal based on the configuration information, the first indication information, and the second indication information, and obtaining the carrier phase measurement result and a time measurement result, where the time measurement result is determined by measuring the reference signal on the time-frequency resource; and reporting the carrier phase measurement result and the time measurement result to the location management function network element, where the carrier phase measurement result and the time measurement result are used by the location management function network element to determine a location of a terminal device.

In a possible implementation, the second indication information further indicates to measure the reference signal on the time-frequency resource to determine the time measurement result.

Alternatively, the method includes: receiving configuration information from a location management function network element, where the configuration information includes a time-frequency resource corresponding to a reference signal; receiving first indication information and second indication information from the location management function network element, where the first indication information indicates information about a time window for measuring the reference signal, and the second indication information indicates to preferentially measure the reference signal within the time window; measuring the reference signal based on the configuration information, the first indication information, and the second indication information, and obtaining a carrier phase measurement result and a time measurement result, where the carrier phase measurement result and the time measurement result are determined by measuring a reference signal within the time window and a reference signal outside the time window; and reporting the carrier phase measurement result and the time measurement result to the location management function network element, where the carrier phase measurement result and the time measurement result are used by the location management function network element to determine a location of a terminal device.

In a possible implementation, third indication information is received, where the third indication information indicates priorities of different resources in measurement of the reference signal within the time window, and/or the third indication information indicates priorities of different resources in measurement of the reference signal outside the time window. The measuring the reference signal based on the configuration information, the first indication information, and the second indication information includes: measuring the reference signal based on the configuration information, the first indication information, the second indication information, and the third indication information.

In a possible implementation, third indication information is received, where the third indication information indicates an identifier of a reference signal resource and/or an identifier of a reference signal resource set that are/is measured in measurement of the reference signal within the time window, and/or the third indication information indicates an identifier of a reference signal resource and/or an identifier of a reference signal resource set that are/is measured in measurement of the reference signal outside the time window. The measuring the reference signal based on the configuration information, the first indication information, and the second indication information includes: measuring the reference signal based on the configuration information, the first indication information, the second indication information, and the third indication information.

Alternatively, the method includes: receiving configuration information from a location management function network element, where the configuration information includes a time-frequency resource corresponding to a reference signal; receiving first indication information and second indication information from the location management function network element, where the first indication information indicates information about a time window for measuring the reference signal, and the second indication information indicates to determine a carrier phase measurement result by measuring the reference signal within the time window; measuring the reference signal based on the configuration information, the first indication information, and the second indication information, and obtaining the carrier phase measurement result or a time measurement result, where the time measurement result is determined by measuring the reference signal on the time-frequency resource; and reporting the carrier phase measurement result or the time measurement result to the location management function network element, where the carrier phase measurement result or the time measurement result is used by the location management function network element to determine a location of a terminal device.

Alternatively, the method includes: receiving configuration information from a location management function network element, where the configuration information includes a time-frequency resource corresponding to a reference signal; receiving first indication information and second indication information from the location management function network element, where the first indication information indicates information about a time window for measuring the reference signal, and the second indication information indicates to preferentially measure the reference signal within the time window; measuring the reference signal based on the configuration information, the first indication information, and the second indication information, and obtaining a carrier phase measurement result or a time measurement result, where the carrier phase measurement result or the time measurement result is determined by measuring a reference signal within the time window and a reference signal outside the time window; and reporting the carrier phase measurement result or the time measurement result to the location management function network element, where the carrier phase measurement result or the time measurement result is used by the location management function network element to determine a location of a terminal device.

According to a third aspect, a communication device is provided. The communication device may be, for example, a location management function network element or a chip or a circuit that is configured to be disposed in a location management function network element. The communication device includes a processing unit and a transceiver unit.

The transceiver unit is configured to: send configuration information to a first device, where the configuration information includes a time-frequency resource corresponding to a reference signal; and send first indication information and second information to the first device, where the first indication information indicates information about a time window for measuring the reference signal, and the second indication information indicates to measure the reference signal within the time window to determine a carrier phase measurement result. The transceiver unit is configured to receive the carrier phase measurement result and a time measurement result that are reported by the first device, where the time measurement result is determined based on measurement of the reference signal on the time-frequency resource. The processing unit is configured to determine a location of a terminal device based on the carrier phase measurement result and the time measurement result.

Alternatively, the transceiver unit is configured to: send configuration information to a first device, where the configuration information includes a time-frequency resource corresponding to a reference signal; and send first indication information and second indication information to the first device, where the first indication information indicates information about a time window for measuring the reference signal, and the second indication information indicates to preferentially measure the reference signal within the time window. The transceiver unit is configured to receive a carrier phase measurement result and a time measurement result that are reported by the first device, where the carrier phase measurement result and the time measurement result are determined by measuring a reference signal within the time window and a reference signal outside the time window. The processing unit is configured to determine a location of a terminal device based on the carrier phase measurement result and the time measurement result.

In a possible implementation, the transceiver unit is further configured to: send third indication information to the first device, where the third indication information indicates priorities of different resources in measurement of the reference signal within the time window, and/or the third indication information indicates priorities of different resources in measurement of the reference signal outside the time window.

In a possible implementation, the transceiver unit is further configured to: send third indication information to the first device, where the third indication information indicates an identifier of a reference signal resource and/or an identifier of a reference signal resource set that are/is measured in measurement of the reference signal within the time window, and/or the third indication information indicates an identifier of a reference signal resource and/or an identifier of a reference signal resource set that are/is measured in measurement of the reference signal outside the time window.

In a possible implementation, that the transceiver unit is configured to send the first indication information and the second indication information to the first device includes: The transceiver unit is configured to send a measurement request message to the first device, where the measurement request message is used to request a measurement reference signal, and the measurement request message includes the first indication information and the second indication information. Alternatively, that the transceiver unit is configured to send the first indication information and the second indication information to the first device includes: The transceiver unit is configured to: send a measurement request message to the first device, where the measurement request message is used to request a measurement reference signal, and the measurement request message includes the first indication information; and send an assistance message to the first device, where the assistance message includes the second indication information.

According to a fourth aspect, a communication device is provided. The communication device may be, for example, a first device or a chip or a circuit that is configured to be disposed in a first device. The communication device includes a processing unit and a transceiver unit.

The transceiver unit is configured to receive configuration information from a location management function network element, where the configuration information includes a time-frequency resource corresponding to a reference signal. The transceiver unit is configured to receive first indication information and second indication information from the location management function network element, where the first indication information indicates information about a time window for measuring the reference signal, and the second indication information indicates to measure the reference signal within the time window to determine a carrier phase measurement result. The processing unit is configured to: measure the reference signal based on the configuration information, the first indication information, and the second indication information, and obtain the carrier phase measurement result and a time measurement result, where the time measurement result is determined based on measurement of the reference signal on the time-frequency resource. The transceiver unit is configured to report the carrier phase measurement result and the time measurement result to the location management function network element, where the carrier phase measurement result and the time measurement result are used by the location management function network element to determine a location of a terminal device.

Alternatively, the transceiver unit is configured to receive configuration information from a location management function network element, where the configuration information includes a time-frequency resource corresponding to a reference signal. The transceiver unit is configured to receive first indication information and second indication information from the location management function network element, where the first indication information indicates information about a time window for measuring the reference signal, and the second indication information indicates to preferentially measure the reference signal within the time window. The processing unit is configured to: measure the reference signal based on the configuration information, the first indication information, and the second indication information, and obtain a carrier phase measurement result and a time measurement result, where the carrier phase measurement result and the time measurement result are determined by measuring a reference signal within the time window and a reference signal outside the time window. The transceiver unit is configured to report the carrier phase measurement result and the time measurement result to the location management function network element, where the carrier phase measurement result and the time measurement result are used by the location management function network element to determine a location of a terminal device.

In a possible implementation, the transceiver unit is configured to: receive third indication information, where the third indication information indicates priorities of different resources in measurement of the reference signal within the time window, and/or the third indication information indicates priorities of different resources in measurement of the reference signal outside the time window. Measuring the reference signal based on the configuration information, the first indication information, and the second indication information includes: measuring the reference signal based on the configuration information, the first indication information, the second indication information, and the third indication information.

In a possible implementation, the transceiver unit is configured to: receive third indication information, where the third indication information indicates an identifier of a reference signal resource and/or an identifier of a reference signal resource set that are/is measured in measurement of the reference signal within the time window, and/or the third indication information indicates an identifier of a reference signal resource object and/or an identifier of a reference signal resource set that are/is measured in measurement of the reference signal outside the time window. Measuring the reference signal based on the configuration information, the first indication information, and the second indication information includes: measuring the reference signal based on the configuration information, the first indication information, the second indication information, and the third indication information.

According to a fifth aspect, a communication device is provided. The device includes at least one processor, configured to execute a computer program or instructions stored in a memory, to perform the method according to the first aspect. Optionally, the device further includes the memory, configured to store the computer program or the instructions. Optionally, the device further includes a communication interface, and the processor reads, through the communication interface, the computer program or the instructions stored in the memory.

In an implementation, the device is a functional communication device configured to implement the positioning method provided in this application in a chip.

In another implementation, the device is a functional chip, chip system, or circuit configured to implement the positioning method provided in this application in a chip.

According to a sixth aspect, a communication device is provided. The device includes at least one processor, configured to execute a computer program or instructions stored in a memory, to perform the method according to the second aspect. Optionally, the device further includes the memory, configured to store the computer program or the instructions. Optionally, the device further includes a communication interface, and the processor reads, through the communication interface, the computer program or the instructions stored in the memory.

In an implementation, the device is a functional communication device configured to implement the positioning method provided in this application in a chip.

In another implementation, the device is a functional chip, chip system, or circuit configured to implement the positioning method provided in this application in a chip.

According to a seventh aspect, this application provides a processor, including an input circuit, an output circuit, and a processing circuit. The processing circuit is configured to receive a signal through the input circuit, and transmit a signal through the output circuit, so that the processor performs the method according to the first aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a processing device is provided, and includes a processor and a memory. The processor is configured to read a computer program or instructions stored in the memory, receive a signal through a transceiver, and transmit a signal through a transmitter, to perform the method according to the first aspect or the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process like sending of indication information may be a process of outputting the indication information from the processor, and receiving of capability information may be a process of receiving input capability information by the processor. Specifically, data output by the processor may be output to the transmitter, and input data received by the processor may be from the transceiver. The transmitter and the transceiver may be collectively referred to as a transceiver.

The processing device in the eighth aspect may be one or more chips. The processor in the processing device may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a ninth aspect, a computer-readable storage medium is provided. The computer-readable medium stores a computer program or instructions executed by a device, and the computer program or the instructions include the method configured to perform the first aspect or the second aspect.

According to a tenth aspect, a computer program product including a computer program or instructions is provided. When the computer program product runs on a computer, the computer is enabled to perform the method provided according to the first aspect or the second aspect.

According to an eleventh aspect, a chip system is provided, and includes a processor, configured to invoke a computer program or instructions stored in a memory, so that a device in which the chip system is installed performs the method according to the first aspect or the second aspect.

According to a twelfth aspect, a communication system is provided. The communication system includes a location management function network element and a first device. The location management function network element is configured to perform the method in any possible implementation of the first aspect, and the first device is configured to perform the method in any possible implementation of the second aspect.

**BRIEF DESCRIPTION OF DRAWINGS**

FIG. 1 is a diagram of a positioning method for a terminal device according to this application;
FIG. 2 is a diagram of a positioning method for a carrier phase according to this application;

FIG. 3 is a diagram of another positioning method for a terminal device according to this application;

FIG. 4 is a diagram of a configured time window according to this application;

FIG. 5 is a diagram of a system architecture to which this application is applicable;

FIG. 6A and FIG. 6B are other diagrams of a system architecture to which this application is applicable;

FIG. 7 is still another diagram of a system architecture to which this application is applicable;

FIG. 8 is a schematic flowchart of a positioning method 800 according to this application;

FIG. 9 is a block diagram of a communication device 100 according to this application; and

FIG. 10 is a block diagram of a communication device 200 according to this application.

## DESCRIPTION OF EMBODIMENTS

The following describes technical solutions of this application with reference to the accompanying drawings.

Wireless communication systems to which embodiments of this application may be applied include but are not limited to a global system for mobile communications (global system for mobile communications, GSM), a long term evolution (long term evolution, LTE) frequency division duplex (frequency division duplex, FDD) system, LTE time division duplex (time division duplex, TDD), an LTE system, a long term evolution advanced (LTE-Advanced, LTE-A) system, a 5G communication system (for example, a 5G new radio (new radio, NR)), a system integrating a plurality of access systems, or an evolved system (for example, a future communication system).

The technical solutions provided in this application may be further applied to machine type communication (machine type communication, MTC), a long term evolution-machine (long Term Evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication modes in an internet of vehicles system are collectively referred to as a vehicle to X (vehicle to X, V2X, where X may represent anything) device. For example, the V2X may include: vehicle-to-vehicle (vehicle-to-vehicle, V2V) communication, vehicle-to-infrastructure (vehicle-to-infrastructure, V2I) communication, vehicle-to-pedestrian (vehicle-to-vehicle, V2P) communication, or vehicle-to-network (vehicle-to-network, V2N) communication.

A network device mentioned in this application may be, for example, a radio access network device, or may be, for another example, a device having a wireless transceiver function. The radio access network device may be a device that provides a wireless communication function service, is usually located on a network side, and includes but is not limited to a next-generation NodeB (gNodeB, gNB) in a 5th generation (5th generation, 5G) communication system, a next-generation base station in a 6th generation (6th generation, 6G) mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home NodeB (for example, a home evolved NodeB or a home NodeB, HNB), a baseband unit (baseband unit, BBU), a transmission reception point (transmission reception point, TRP), a transmission point (transmission point, TP), a base transceiver station (base transceiver station, BTS), and the like. In a network structure, the access network device may include a central unit (centralized unit, CU) node, a distributed unit (distributed unit, DU) node, a RAN device including a CU node and a DU node, or a RAN device including a control plane CU node, a user plane CU node, and a DU node. The access network device provides a service for a cell. A user equipment communicates with a base station through a transmission resource (for example, a frequency domain resource, or a frequency spectrum resource) used for the cell. The cell may be a cell corresponding to the base station (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-rate data transmission service. Alternatively, the network device may be a base station device in a 5G network or a network device in a future evolved public land mobile network (public land mobile network, PLMN) network. The radio access network device may be a macro base station, a micro base station, or an indoor station, or may be a relay node or a donor node, or may be a device that provides a wireless communication service for a user equipment in a V2X communication system, a radio controller in a cloud radio access network (cloud radio access network, CRAN) scenario, a relay station, a vehicle-mounted device, a wearable device, a network device in a future evolved network, or the like. A specific technology and a specific device form that are used by the radio access network device are not limited in embodiments of this application. For ease of description, the following uses an example in which a base station is used as a radio access network device for description.

A terminal may also be referred to as a terminal device, a user equipment (user equipment, UE), a mobile station (mobile station, MS), a mobile terminal (mobile terminal, MT), or the like, and may be an entity, for example, a mobile phone, on a user side, configured to receive or transmit a signal. The terminal device may be a user equipment (user equipment, UE). The UE includes a handheld device, a vehicle-mounted device, a wearable device, or a compute device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. In embodiments of this application, an apparatus configured to implement a function of a terminal may be a terminal, or may be an apparatus, for example, a chip system, a communication module, or a modem, that can support a terminal in implementing a function. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which an apparatus configured to implement the function of the terminal is a terminal, and the terminal is a UE. A specific technology and a specific device form that are used by the terminal device are not limited in embodiments of this application.

Optionally, the UE may alternatively be configured to serve as a base station. For example, the UE may serve as a scheduling entity that provides a sidelink signal between UEs in vehicle-to-everything (vehicle-to-everything, V2X), device-to-device (device-to-device, D2D), peer-to-peer (peer-to-peer, P2P), or the like.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Communication between the base station and the terminal, between the base stations, or between the terminals may be performed over licensed spectrums, or may be performed over unlicensed spectrums, or may be performed over both the licensed spectrum and the unlicensed spectrum. Communication may be performed over spectrums below 6 gigahertz (gigahertz, GHz), or may be performed over spectrums above 6 GHz, or may be performed over both the spectrums below 6 GHz and the spectrums above 6 GHz. A spectrum resource used for wireless communication is not limited in embodiments of this application.

In embodiments of this application, a function of the base station may be performed by a module (for example, a chip) in the base station, or may be performed by a control subsystem including a function of the base station. The control subsystem including the function of the base station herein may be a control center in an application scenario of the foregoing terminal, such as the smart grid, the industrial control, the smart transportation, and the smart city. The function of the terminal may alternatively be performed by a module (for example, a chip or a modem) in the terminal, or may be performed by an apparatus including the function of the terminal.

For ease of understanding the technical solutions provided in this application, the following first briefly describes some terms and some positioning network elements in this application.

1. Resource

In this application, the "resource" may be a frequency domain resource, a time domain resource, a resource block (resource block, RB), a physical resource block (physical resource block, PRB), or the like. For example, data or information may be carried on a time-frequency resource, where the "time-frequency resource" may include a time domain resource and a frequency domain resource. In time domain, the time-frequency resource may include one or more time units. One time unit may be one symbol, one mini-slot (Mini-slot), one slot (slot), or one subframe (subframe). Duration of one subframe in time domain may be 1 millisecond (ms). One slot includes 7 or 14 symbols. One mini-slot may include at least one symbol (for example, 2 symbols, 4 symbols, 7 symbols, or any quantity of symbols fewer than or equal to 14 symbols).

2. Reference signal (reference signal, RS)

The reference signal, also referred to as a pilot signal (pilot signal), is a known signal that is provided by a transmitting device for a receiving device and that is used for channel estimation, channel measurement, channel sounding, channel demodulation, or the like.

In embodiments of this application, the reference signal may be used in a physical layer (physical layer), and does not carry data information from a higher layer. In addition, the reference signal may include a downlink reference signal and an uplink reference signal.

The downlink reference signal includes a downlink cell-specific reference signal (cell-specific reference signal, CRS), a downlink terminal device-specific reference signal (UE-specific reference signal, UE-RS), a downlink channel state information reference signal (channel state information reference signal, CSI-RS) used for channel measurement, a downlink group-specific reference signal (group-specific reference signal, GRS), a downlink positioning reference signal (positioning RS, PRS), a downlink beam reference signal (beam reference signal, BRS), a downlink beam refinement reference signal (beam refinement reference signal, BRRS), a downlink phase compensation reference signal (phase compensation reference signal, PCRS), a downlink pathloss reference signal (pathloss reference signal, PL-RS), and the like. The downlink UE-RS is also referred to as a downlink demodulation reference signal (demodulation reference signal, DMRS). There is also a synchronization signal/physical broadcast channel block (synchronization signal/physical broadcast channel block, SS/PBCH block). The SS/PBCH block may be referred to as a synchronization signal block (synchronization signal block, SSB) for short.

The uplink reference signal includes a demodulation reference signal (demodulation reference signal, DMRS) used for uplink demodulation, a sounding reference signal (sounding reference signal, SRS) used for uplink channel measurement, an uplink PCRS, or the like. A DMRS used for physical uplink control channel (physical uplink control channel, PUCCH) demodulation is referred to as a PUCCH DMRS, and a DMRS used for physical uplink shared channel (physical uplink shared channel, PUSCH) demodulation is referred to as a PUSCH DMRS.

In addition to the reference signal, the reference signal in this application may alternatively be a sequence signal in a sequence signal set having a good correlation characteristic. The good correlation characteristic means that any sequence in the set has a large autocorrelation peak, and any two sequences in the set have a small cross-correlation peak. To be specific, in embodiments of this application, a sending device may send a plurality of signals, where at least one of the signals is a sequence signal having the good correlation characteristic, for example, pseudo random (pseudo random) sequence and Zadoff-Chu (Zadoff-Chu) sequence.

Specifically, correlation means that correlation calculation is performed between one sequence signal and another sequence signal that are in a same set, to obtain a correlation value through calculation. Therefore, for the sequence signal having the good correlation characteristic, the receiving device can detect, based on the correlation, whether the signal exists. In other words, a detection mechanism such as a pilot is not required for transmission of a sequence signal having the correlation. A reference signal (or a pilot signal) may be one of signals having good correlation characteristics.

It should be understood that a specific example of the sequence signal enumerated above is merely an example for description, and this application is not limited thereto. For example, the sequence signal may alternatively be a signal used to carry feedback information (for example, acknowledgment (ACK) information or negative acknowledgment (NACK) information), a resource request signal, or a measurement request signal.

3. Location management function (location management function, LMF) network element

The LMF network element is a network element, a module, or a component that provides a positioning function in a 5G new radio (new radio, NR) core network.

4. Enhanced serving mobile location center (enhanced serving mobile location center, E-SMLC)

The E-SMLC is a network element, a module, or a component that provides a positioning function in a 4G core network.

5. Secure user plane location (secure user plane location, SUPL) service platform (SUPL location platform, SLP)

The SLP is a network element, a module, or a component that processes a user plane security positioning protocol in a 4G core network.

6. User equipment location management control (user equipment location management control, UE-LMC) module

The UE-LMC is a component or an application that is deployed on a UE and has some LMF functions, and is configured to support a positioning service on a PC5 interface. The UE-LMC is a possible deployment method.

New radio (new radio, NR) positioning, as an emerging radio technology, has a unique property that can provide more value in positioning capability enhancing. In the 3rd generation partnership project (3rd generation partnership project, 3GPP) release 16 (release 18, R16), a plurality of positioning technologies such as downlink time difference of arrival (downlink time difference of arrival, DL-TDOA), downlink angle of departure (downlink angle of departure, DL-AoD), uplink time difference of arrival (uplink time difference of arrival, UL-TDOA), uplink angle of arrival (uplink angle of arrival, UL-AoA), and multi round trip time (multi round trip time, multi-RTT) are supported. The DL-TDOA, UL-TDOA, and multi-RTT algorithms are positioning technologies based on measured of time of arrival. To be specific, a receiver side needs to measure a time of arrival of a signal sent by a transmitter side, and then obtain distance information between the receiver side and the transmitter side through conversion, to finally obtain a location of a to-be-positioned target. The DL-AoD and the UL-AoA are positioning technologies based on measurement of an angle of arrival. To be specific, a receiver side measures an angle of arrival of a reference signal sent by a transmitter side, and then infers a location of the receiver side based on information about angles between the receiver side and a plurality of transmitter sides at known locations. Generally, positioning accuracy of these positioning technologies is not high. The following uses the UL-TDOA technology as an example to briefly describe an uplink positioning procedure.

1. UL-TDOA-based uplink positioning technology

A base station measures an uplink reference signal, for example, measures a time of arrival of an uplink sounding reference signal (sounding reference signal, SRS) sent by a user equipment (user equipment, UE). A measurement process generally includes the following steps: First, an LMF network element requests an SRS configuration information from a serving base station. The base station feeds back the SRS configuration information to the LMF, and sends the SRS configuration information to the UE. The LMF network element sends the SRS configuration information to another base station participating in positioning. Then, the LMF requests measurement from the base station. After receiving an indication of the LMF network element, the base station starts to receive the SRS sent by the UE, and measures the time of arrival of the SRS. Finally, the base station reports a measurement result to the LMF network element, and the LMF performs location estimation based on the received measurement result, to position a to-be-positioned target.

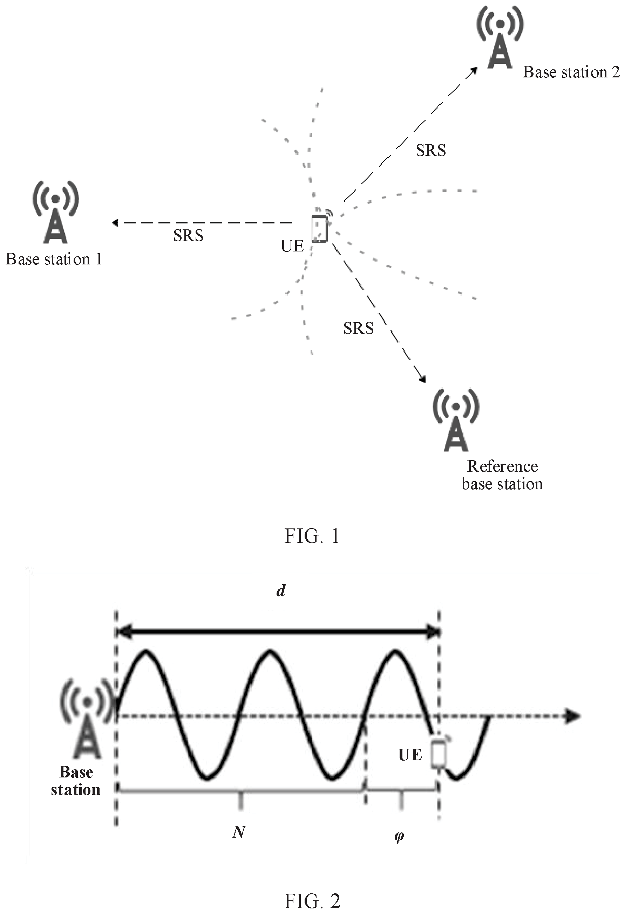

The following briefly describes how the LMF obtains a location of a to-be-positioned UE through calculation based on a measurement result of the UL-TDOA technology. FIG. 1 is a diagram of UL-TDOA-based positioning. First, it is assumed that locations of three base stations are known. Herein, coordinates of an $i^{th}$ base station are defined as $(x_i, y_i)$, coordinates of a to-be-positioned UE are defined as $(x_{UE}, y_{UE})$, and one of the base stations is used as a reference base station. It is assumed that a time of arrival of an SRS measured by the other two base stations (that is, a base station #1 and a base station #2) is $t_i$. In this case, a time difference of arrival between either of the two base stations and the reference base station is $\Delta t_{i1}$. According to a definition of a hyperbola (that is, a distance between a point on the hyperbola and two fixed points is a constant), the to-be-positioned target is located on a hyperbola that uses the two base stations as focuses, and the following equation set may be listed:

$$\sqrt{(x_1 - x_{UE})^2 + (y_1 - y_{UE})^2} - \sqrt{(x_2 - x_{UE})^2 + (y_2 - y_{UE})^2} = c * \Delta t_{21} \quad (1)$$

$$\sqrt{(x_1 - x_{UE})^2 + (y_1 - y_{UE})^2} - \sqrt{(x_3 - x_{UE})^2 + (y_3 - y_{UE})^2} = c * \Delta t_{31} \quad (2)$$

In the foregoing two equations, c is a speed of light. Because there are only two unknown numbers $(x_{UE}, y_{UE})$, the location coordinates of the to-be-positioned target UE may be obtained by combining equation (1) and equation (2). Actually, due to existence of a measurement error, the foregoing equations usually do not have a closed-form solution, and a classical optimization algorithm like a least square algorithm or a particle swarm filter algorithm is used in engineering to estimate optimal solutions of the foregoing equations.

A carrier phase positioning technology is discussed in the 3GPP R18 standard version. The carrier phase positioning technology is one of main current high-precision positioning methods, and a distance having integer ambiguity is measured by measuring a carrier phase change of a reference signal from a transmitter side to a receiver side. A radio frequency signal with a frequency of 3 GHz is used as an example, and a corresponding carrier wavelength is 0.1 m. After integer ambiguity of a carrier phase can be correctly solved, carrier phase ranging precision can reach a centimeter level to a millimeter level theoretically, to obtain a high-precision positioning result.

FIG. 2 is a diagram of carrier phase positioning. In FIG. 2, "d" is a distance between a receiver side and a transmitter side; "φ" is a carrier phase measurement value; "N" represents integer ambiguity, is an integer, and represents that N carrier integers have passed; and "λ" is a carrier wavelength. The distance d and the carrier phase φ satisfy the following formula:

$$d = \lambda \left( N + \frac{\varphi}{2\pi} \right) \quad (3)$$

In the 3GPP R17 standard version, a reference station (positioning reference unit, PRU) is introduced to assist in improving positioning performance. A reference station at a known location is used to measure a positioning reference signal, to construct a double-difference equation between different base stations and between a positioning terminal and the reference station, thereby eliminating impact of a non-ideal factor and improving positioning accuracy. In R18 carrier phase positioning, the PRU is also used to assist in carrier phase measurement, to improve carrier phase positioning accuracy. The following simply describes a double-difference carrier phase positioning method.

2. Double-difference carrier phase positioning technology

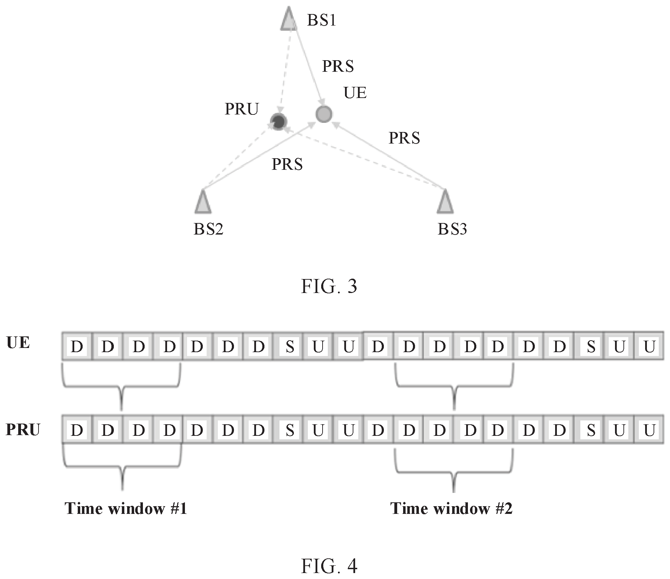

FIG. 3 is a diagram of a double-difference carrier phase positioning technology. In FIG. 3, a UE is adjacent to three base stations (BS1, BS2, and BS3) and one PRU. It is assumed that a synchronization error or a phase error exists in both the UE and the base stations, and a phase measured by the UE or the base stations may be represented as:

$$\varphi_t^{(i)} = \left(-2\pi f\left(\tau_t^{(i)} + \Delta_t^{(i)}\right) - \left(\phi_t - \phi^{(i)}\right)\right) - 2\pi N_t^{(i)} \quad (4)$$

Assuming that Formula (4) is understood as the phase measured by the UE, in Formula (4), $\tau_t^{(i)}$ is transmission latency between the UE and a base station $i$, $\Delta_t^{(i)}$ is a time synchronization error between the UE and the base station i, $\phi_t$ is a random initial phase error of the UE, $\phi^{(i)}$ is a random initial phase error of the base station $i$, and $N_t^{(i)}$ is phase integer ambiguity between the UE and the base station i.

Assuming that Formula (4) is understood as the phase measured by the base station, a random initial phase $\phi_t$ of the UE may be eliminated by performing subtracting processing between different base stations, to obtain a phase difference of arrival (phase difference of arrival, PDOA):

$$\varphi_t^{(ij)} = \left(\varphi_t^{(j)} - \varphi_t^{(i)}\right) = \left(-2\pi f\left(\tau_t^{(ij)} + \Delta_t^{(ij)}\right) - \phi^{(ij)}\right) - 2\pi N_t^{(ij)} \quad (5)$$

Similarly, for the PRU, a PDOA may be obtained through measurement:

$$\varphi_p^{(ij)} = \left(\varphi_p^{(j)} - \varphi_p^{(i)}\right) = \left(-2\pi f\left(\tau_p^{(ij)} + \Delta_t^{(ij)}\right) - \phi^{(ij)}\right) - 2\pi N_p^{(ij)} \quad (6)$$

A double-difference PDOA may be obtained by performing subtracting processing between the UE and the PRU, that is, subtracting Formula (6) from Formula (5):

$$\varphi_{tp}^{(ij)} = \left(\varphi_t^{(ij)} - \varphi_p^{(ij)}\right) = \left(-2\pi f\tau_{tp}^{(ij)}\right) - 2\pi N_{tp}^{(ij)} \quad (7)$$

In this way, a random initial phase $\phi^{(i)}$ and a time synchronization error $\Delta_t^{(ij)}$ on a base station side may be eliminated, to obtain $\tau_{tp}^{(ij)}$, where a plurality of measured double-difference PDOA values may be obtained based on information measured by a plurality of base stations, and a location of the to-be-positioned UE may be obtained through calculation by combining an equation set and based on a known PRU location and base station locations.

Generally, preliminary coarse positioning is first performed on the UE by using a positioning technology based on a measured time of arrival or based on a measured angle of arrival, and then accurate positioning is further performed on a location of the UE by using the carrier phase positioning technology.

In the carrier phase positioning technology, in an example of downlink positioning, some error terms that change with time, for example, a random initial phase error and a clock drift, can be eliminated only when both the terminal device and the PRU measure a reference signal sent by a base station. An LMF network element configures a time window (time window) for the terminal device and the PRU, and indicates the terminal device and the PRU to measure and report a downlink reference signal resource set within the time window. In this case, both the terminal device and the PRU can measure a downlink reference signal. However, the time window configured by the LMF is not only valid for carrier phase measurement, but also valid for a time measurement quantity. In other words, a downlink time measurement quantity also needs to be measured and reported within the configured time window. For the time window, it is specified in the standard that duration of the time window may be {1, 2, 4, 6, 8, 12, 16} slots, and a quantity of configured time windows may be {1, 2}. In this case, for downlink time measurement, measurement can be performed only on reference signals in a maximum of two time windows. As shown in FIG. 4, both the terminal device and the PRU may measure reference signals in a time window #1 and a time window #2. Consequently, a quantity of reference signal resource sets that can be used for positioning is excessively small. For new radio (new radio, NR) positioning, a larger quantity of resource sets that can be measured indicates a larger quantity of obtained measurement quantities, and overall positioning accuracy can be improved through smoothing or weighting. Therefore, a reference signal resource set having only two time measurement windows causes an excessively small time measurement quantity, and overall positioning accuracy is low. A similar problem also exists in uplink positioning. If the carrier phase positioning technology is used, some error terms that change with time can be eliminated only when all base stations participating in positioning in uplink positioning also measure a reference signal sent by a terminal device. Therefore, how to improve positioning accuracy of the terminal device becomes a technical problem that needs to be resolved.

In view of this, this application provides a positioning technology. In either the carrier phase positioning technology or the measurement time-based positioning technology, a time measurement result may be determined not only based on a reference signal measured within the time window, but also based on a reference signal measured outside the time window or a reference signal on a time-frequency resource. Because a quantity of measured reference signals increases for determining the time measurement result, positioning accuracy of the terminal device is improved.

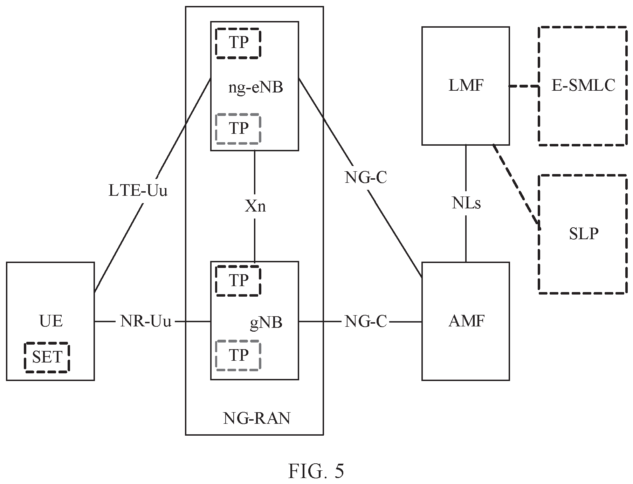

FIG. 5 is a diagram of a system architecture to which this application is applicable. FIG. 5 describes a positioning network architecture based on a next-generation radio access base station (next-generation radio access network, NG-RAN). A core network function (access and mobility function, AMF) network element receives a positioning service request that is about a terminal device and that is initiated by another network element in a network. The AMF network element sends the received request to an LMF, and the LMF network element is responsible for processing the received positioning request and initiating a related positioning procedure. The NG-RAN access network includes a 4G station NG-eNB and a 5G station gNB that are connected to a 5G core network. The NG-RAN is responsible for sending and receiving a reference signal resource set, and obtaining related measurement information. A NG-C in FIG. 4 is a control plane interface. The NG-eNB communicates with the 5G station gNB through an Xn interface, and both the NG-eNB and the gNB include a transmission point (transmission point, TP). The LMF network element communicates with the AMF network element through an NLs interface, and the LMF network element is connected to an enhanced serving mobile location center E-SMLC and an SLP.

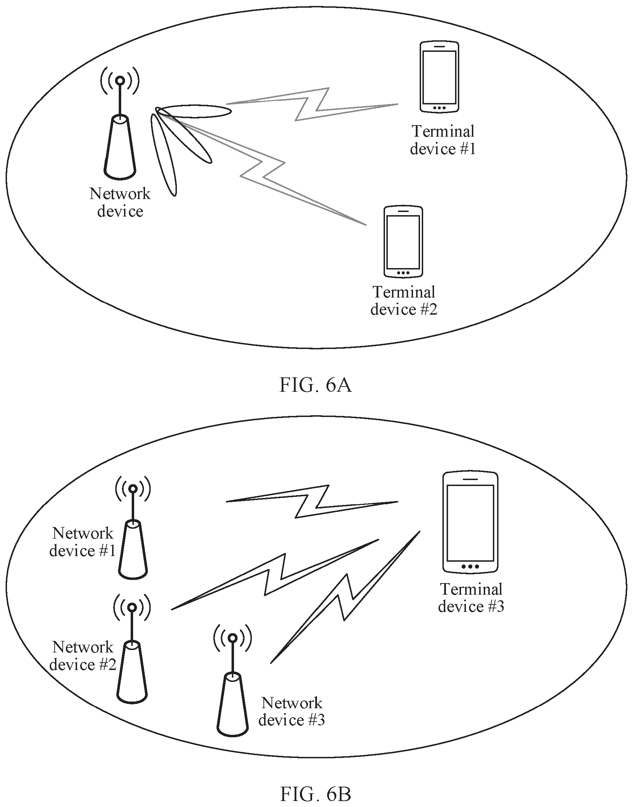

A Uu interface is a communication interface between a terminal and a base station, and can implement reliable communication in a long distance and a larger range. An NR-Uu communication system to which this application is applicable is shown in FIG. 6A and FIG. 6B. The system includes one or more network devices and one or more terminal devices. A single network device may transmit data or control signaling to one or more terminal devices. As shown in FIG. 6A, a same network device may separately transmit data or control signaling to a terminal device #1 and a terminal device #2. Alternatively, a plurality of network devices may all transmit data or control signaling to a single terminal device. As shown in FIG. 6B, both a network device #1 to a network device #3 may transmit data or control signaling to a terminal device #3.

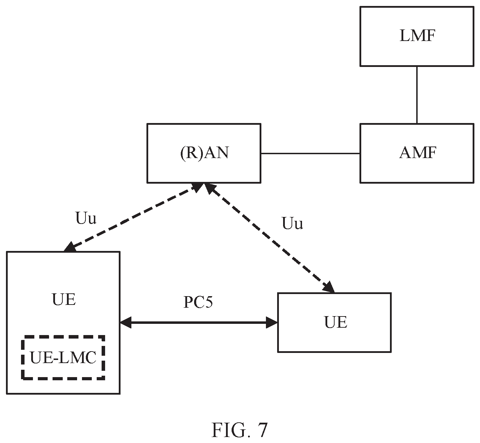

This application may also be applicable to a communication and positioning architecture based on a PC5 interface. The PC5 interface is a direct-connection communication interface, and is a communication interface between terminal devices, as shown in FIG. 7. A UE #1 and a UE #2 may communicate with each other through the PC5 interface, and may communicate with a (R)AN through a Uu interface. The (R)AN is connected to an LMF network element through an AMF network element.

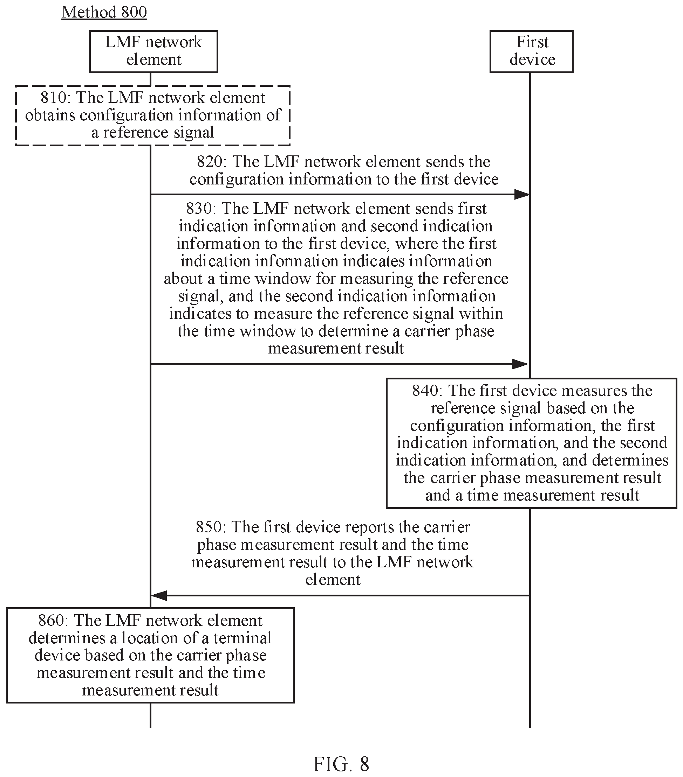

FIG. 8 is a schematic flowchart of a positioning method 800 according to this application. As shown in FIG. 8, the method includes the following steps.

Optionally, in 810, an LMF network element obtains configuration information of a reference signal, where the configuration information includes a time-frequency resource corresponding to the reference signal.

In this application, the configuration information of the reference signal includes, for example, one or more of the following: a type or type set of the reference signal, resource information of the reference signal, a sequence of the reference signal, a subcarrier spacing of the reference signal, power of the reference signal, and a measurement request indication of the reference signal. The "type or type set of the reference signal" includes, for example, a zero-power-type reference signal and/or a non-zero-power-type reference signal. The "resource information of the reference signal" may include, for example, at least one of the following: a reference signal resource set, a time domain resource start location, an interval or a periodicity between time domain resources, a symbol location, a symbol location set, a time domain pattern, time domain time window information, a frequency domain resource start location, a frequency domain resource size, an interval or a periodicity between frequency domain resources, a frequency domain pattern, an index of a correspondence between a symbol and a frequency domain pattern, a port index, a beam (beam) index, and a basic time-frequency pattern or pattern index. Specifically, for information included in the configuration information of the reference signal, refer to technical specifications (technology specification, TS) 37.355 (which describes PRS configurations) and TS 38.455 (which describes SRS configurations). Details are not described in this application.

In this application, the reference signal may include, for example, a reference signal resource and a reference signal resource set. For example, the reference signal resource may include a sounding reference signal SRS resource. For example, the reference signal resource set may include a positioning reference signal PRS resource set. For example, in a downlink positioning scenario, the reference signal may be understood as the PRS resource set. For example, in an uplink positioning scenario, the reference signal resource set may be understood as an SRS resource set.

In this application, the LMF network element may further obtain location information of a serving cell and/or an identifier of the serving cell. The information may assist the LMF network element in positioning a terminal device.

In a possible implementation, downlink positioning is used as an example. The LMF network element may request the configuration information from a serving base station (which, for example, may be a plurality of base stations or a plurality of transmission reception points (transmission reception point, TRP)). For example, the LMF network element may send an information request message (for example, a gNB/TRP information request) to the serving base station, where the request message is used to request to obtain the configuration information. The serving base station sends an information response (for example, a gNB/TRP information response) to the LMF network element, where the response message carries the configuration information.

In another possible implementation, uplink positioning is used as an example. The LMF requests the configuration information from a serving base station. For example, the LMF may send a positioning information request message (for example, a NRPPa positioning information request) to the serving base station. The serving base station determines configuration information of an available reference signal (for example, an SRS resource), sends SRS configuration information to the terminal device and a PRU, and also sends a positioning information response message (for example, a NRPPa positioning information response) to the LMF, where the response message carries the configuration information of the reference signal.

In still another possible implementation, the LMF network element pre-stores the configuration information. If positioning is required subsequently, the previously stored configuration information may be directly used, and configuration information does not need to be requested from the base station.

In a downlink positioning scenario, before step 810, the method further includes: The LMF network element obtains capability information of the terminal device, where the capability information includes at least one of the following: a TDOA model of the terminal device, a measurement capability of the terminal device, and a multipath reporting capability of the terminal device. For example, the LMF sends a capability request message (for example, LPP Capability Transfer) to the terminal device, to request to obtain a capability of the terminal device.

820: The LMF network element sends the configuration information to a first device. Correspondingly, the first device receives the configuration information.

In this application, in the downlink positioning scenario, the first device may be understood as a terminal device and a PRU. In the uplink positioning scenario, the first device may be understood as base stations participating in positioning. It can be learned from the foregoing description that there are usually a plurality of base stations participating in positioning, and in a typical scenario, three base stations all participate in positioning of the terminal device.

830: The LMF network element sends first indication information and second indication information to the first device, where the first indication information indicates information about a time window for measuring the reference signal, and the second indication information indicates to measure the reference signal within the time window to determine a carrier phase measurement result.

Correspondingly, the first device receives the first indication information and the second indication information.

In a possible implementation, the LMF network element sends a measurement request message to the first device, where the measurement request message is used to request to measure the reference signal, and the measurement request message includes the first indication information and the second indication information. In another possible implementation, the LMF network element sends a measurement request message to the first device, where the measurement request message is used to request to measure the reference signal, and the measurement request message includes the first indication information; and the LMF network element sends an assistance message to the first device, where the assistance message includes the second indication information.

In this application, the "assistance message" may also be referred to as a "positioning assistance message".

In this application, in a possible implementation, the first indication information and the second indication information may be carried in a same message. For example, the first indication information and the second indication information may be carried in measurement request information. In this case, it is equivalent to that the first indication information and the second indication information are simultaneously delivered. In another possible implementation, the first information and the second information are different information. For example, the first indication information is carried in the measurement request message, and the second indication information may be carried in the assistance message (which may also be referred to as the "positioning assistance message").

For example, in uplink positioning, the measurement request message may be, for example, an NRPPa measurement request. For example, in downlink positioning, the assistance message may be, for example, request location information.

In this application, the LMF may determine information about a time window based on the configuration information. The "information about the time window" includes at least one of the following: a start location of the time window, a length of the time window, a start resource location of a reference signal within the time window, an interval between reference signal resources within the time window, and the like. As shown in FIG. 4, the LMF may determine the time window based on the time-frequency resource that corresponds to the reference signal and that is in the configuration information. In this application, the time window is located on the time-frequency resource, or it may be understood as that a part of the time-frequency resource is the time window.

In a possible implementation, the second indication information indicates to determine the carrier phase measurement result by measuring the reference signal within the time window, where a time measurement result is determined based on measurement of the reference signal on the time-frequency resource. In other words, in this implementation, the time measurement result may not be restricted by the time window, and the first device may perform measurement on a time-frequency resource outside the time window, to obtain the time measurement result. For example, the reference signal measured within the time window is used only to determine the carrier phase measurement result. For example, specific reference signals that are to be measured to determine the time measurement result may have been predetermined in a protocol in advance. For example, the terminal device selects a reference signal on a configured time-frequency resource, and then measures the selected reference signal, to determine the time measurement result.

In another possible implementation, the second indication information indicates to preferentially measure the reference signal within the time window, where the measured reference signal includes the reference signal measured within the time window and a reference signal measured outside the time window, and the measured reference signal is used to determine the carrier phase measurement result and a time measurement result. In other words, in this application, the reference signal within the time window may be used only to determine the carrier phase measurement result, and the time measurement result is determined by measuring the reference signal outside the time window. Alternatively, the reference signal within the time window may be used to determine the carrier phase measurement result and the time measurement result, and the reference signal outside the time window may also be measured to determine the time measurement result.

It should be understood that a quantity of reference signals on the time-frequency resource is usually greater than a quantity of reference signals configured within the time window. Therefore, a quantity of reference signals on the time-frequency resource that are measured by the first device is greater than a quantity of reference signal measured only within the time window, so that the finally determined time measurement result is more accurate, and positioning accuracy of the terminal device is higher. Alternatively, because the first device may measure both the reference signal within the time window and the reference signal outside the time window, a quantity of measured reference signals is greater than a quantity of reference signals measured only within the time window, and the finally determined time measurement result is more accurate, thereby improving overall positioning accuracy of the terminal device.

In this application, the carrier phase measurement result includes a measurement result of a carrier phase RSCP of a reference signal resource set and/or a measurement result of a carrier phase difference RSCPD of a reference signal resource set; and the time measurement result includes a measurement result of at least one of the following: a relative time of arrival RTOA, a reference signal time difference of arrival RSTD, a receive-transmit time difference (Rx-Tx time difference) of the terminal device, and a receive-transmit time difference (Rx-Tx time difference) of a base station.

For example, the second indication information may be designed in the following manners.

Manner 1:

The second indication information is a 1-bit indication. When a value of the second indication information is "0", it indicates that the first device can measure a reference signal only within an indicated time window, to obtain the carrier phase measurement result and the time measurement result. When a value of the second indication information is "1", a reference signal measured within a time window is used to determine the carrier phase measurement result. The first device may measure a reference signal received on the time-frequency resource that corresponds to the reference signal and that is configured by using the configuration information, to determine the time measurement result, without considering whether the reference signal is within the time window. In other words, the reference signal may be outside the time window. For another example, when a value of the second indication information is "1", it only indicates that a reference signal measured within a time window is used only to determine the carrier phase measurement result. Specific reference signals that are to be measured to determine the time measurement result may be agreed on in advance in a protocol. Alternatively, the time measurement result may be determined based on a selected and configured time-frequency resource.

For example, in downlink positioning, it is assumed that the LMF determines, based on the capability of the terminal device, that the terminal device can measure six PRS resource sets, and configures a time window for the first device (for example, the UE and the PRU), where the time window includes two PRS resource sets in total. In this case, the first device may measure four PRS resource sets included in the time window, and calculate the carrier phase measurement result. When the time measurement result is to be determined, a plurality of PRS resource sets (for example, four PRS resource sets) on the time-frequency resource corresponding to the reference signal may be measured.

In Manner 1, optionally, the second indication information further indicates to measure the reference signal on the time-frequency resource to determine the time measurement result.

Based on the foregoing technical manner, in this application, the carrier phase measurement result may be decoupled from the time measurement result, and the time measurement result is irrelevant to the configured time window. In other words, the first device may measure a reference signal on a time-frequency resource within or outside the time window, to determine the time measurement result, and the time measurement result is related to a configured time-frequency resource. In this way, a quantity of reference signals used to determine the time measurement result increases, which can ensure positioning accuracy in the carrier phase positioning technology, and can also ensure positioning accuracy in the measurement time-based positioning technology, thereby improving overall positioning accuracy of the terminal device.

Manner 2:

The second indication information is a 1-bit indication. When a value of the second indication information is "0", it indicates that the first device can measure a reference signal only within an indicated time window, to obtain the carrier phase measurement result and the time measurement result. When a value of the second indication information is "1", it indicates that the first device preferentially measures a configured reference signal within an indicated time window, or may measure a reference signal configured outside the window, to obtain the carrier phase measurement result and the time measurement result.

It should be understood that, in this application, in a possible implementation, the LMF network element obtains the capability of the terminal device, and may determine a quantity of to-be-measured reference signals for the terminal device based on the capability of the terminal device. For example, in downlink positioning, it is assumed that the LMF determines, based on the capability of the terminal device, that the terminal device can measure four PRS resource sets. If the time window includes two PRS resource sets in total, and there are also a plurality of PRS resource sets outside the time window, the first device may preferentially measure the two PRS resource sets within the time window, and then measure any two PRS resource sets outside the time window. Alternatively, it may be understood as that, in Manner 2, if the value of the second indication information is "1", it indicates that not only the reference signal is measured within the time window, but also the reference signal is measured outside the time window.

In Manner 2, optionally, the method further includes: The LMF network element sends third indication information to the first device, where the third indication information indicates priorities of different resources in measurement of the reference signal within the time window, and/or the third indication information indicates priorities of different resources in measurement of the reference signal outside the time window.

The "different resources" may be understood as a symbol, a slot, a frame, or the like corresponding to the reference signal. This is not limited. Specifically, for understanding of the resource, refer to the foregoing content.

In Manner 2, optionally, the method further includes: The LMF network element sends third indication information to the first device, where the third indication information indicates an identifier of a reference signal resource and/or an identifier of a reference signal resource set that are/is measured in measurement of the reference signal within the time window, and/or the third indication information indicates an identifier of a reference signal resource and/or an identifier of a reference signal resource set that are/is measured in measurement of the reference signal outside the time window. It may also be understood as that the third indication information may indicate specific reference signals to be measured within the time window and/or specific reference signals to be measured outside the time window.

For example, it is assumed that the LMF determines, based on the capability of the terminal device, that the terminal device can measure four PRS resource sets, and the LMF configures a time window for the terminal device. In an example of downlink positioning, the time window includes two PRS resource sets, namely, a PRS resource set #1 and a PRS resource set #2. In this case, the LMF may further send the third indication information to the first device, where the third indication information indicates (2,1), which means that the PRS resource set #2 within the time window may be measured first, and then the PRS resource set #1 within the time window is measured.

For example, it is assumed that two PRS resource sets, namely, a PRS resource set #3 and a PRS resource set #4, are further included outside the time window. In this case, the third indication information may indicate (3,4), which means that the PRS resource set #3 outside the time window is first measured, and then the PRS resource set #4 outside the time window is measured.

In a possible implementation, the third indication information may further indicate both the identifier of the reference signal resource set to be measured within the time window and the identifier of the reference signal resource set to be measured outside the time window. For example, the third indication information may indicate a list, for example, the list is {(2,1) (3,4)}. In this case, it indicates that, when the reference signal is measured within the time window, the PRS resource set #2 may be preferentially measured, and then the PRS resource set #1 is measured; and when the reference signal is measured outside the time window, the PRS resource set #3 may be preferentially measured, and then the PRS resource set #4 is measured.

It may also be understood as that, in this application, a bit indicator (for example, the second indication information) may be added to indicate whether measurement within an indicated time window is performed only for the RSCP/RCPD (for example, the carrier phase measurement result), or whether the UE and the PRU can measure a downlink (downlink, DL) PRS resource set outside an indicated time period.

Based on the foregoing implementation, in this application, the first device may measure both the reference signal within the time window and the reference signal outside the time window. A quantity of measured reference signals is greater than a quantity of reference signals measured only within the time window, so that the finally determined time measurement result is more accurate, and positioning accuracy of the terminal device is higher.

840: The first device measures the reference signal based on the configuration information, the first indication information, and the second indication information, and determines the carrier phase measurement result and/or the time measurement result.

In a possible implementation, in the downlink positioning scenario, the serving base station sends the reference signal resource set to the terminal device and the PRU based on the configuration information. The terminal device and the PRU receive the reference signal resource set based on the configuration information of the reference signal, and measure the reference signal resource set based on the first indication information and the second indication information, to obtain the carrier phase measurement result and/or the time measurement result. For example, based on the configuration information, the serving base station may periodically send the reference signal resource set or aperiodically send the reference signal resource set. For a specific measurement manner, refer to the example of step 840 above. Details are not described again.

In another possible implementation, in the uplink positioning scenario, the serving base station sends the configuration information to the terminal device (or may further send the configuration information to the PRU), and the terminal device (or the PRU may further be included) sends, based on the configuration information, the reference signal resource to each base station participating in positioning. In this case, each base station may receive the reference signal resource based on the configuration information, and measure the reference signal resource based on the first indication information and the second indication information, to obtain the carrier phase measurement result and/or the time measurement result. For a specific measurement manner, refer to the example of step 850 above. Details are not described again.

In a possible implementation, the first device measures the reference signal based on the configuration information, the first indication information, the second indication information, and the third indication information, and determines the carrier phase measurement result and/or the time measurement result.

850: The first device reports the carrier phase measurement result and/or the time measurement result to the LMF.

Correspondingly, the LMF receives the carrier phase measurement result and/or the time measurement result reported by the first device.

In a possible implementation, in the downlink positioning scenario, the UE and the PRU may report the measurement result to the LMF. For example, the UE and the PRU may send a provide location information message to the LMF, where the message carries the carrier phase measurement result and the time measurement result.

In another possible implementation, in the uplink positioning scenario, each base station participating in positioning may report the measurement result to the LMF. For example, each base station participating in positioning sends a measurement response message (NRPPa measurement response) to the LMF, where the response message carries the measurement result.

860: The LMF determines a location of the terminal device based on the carrier phase measurement result and/or the time measurement result.

In a possible implementation, the LMF determines the location of the terminal device based on the carrier phase measurement result and/or the time measurement result and the location information of the serving cell.

In another possible implementation, the LMF determines the location of the terminal device based on the carrier phase measurement result and/or the time measurement result, the location information of the serving cell, and location information of the PRU.

It may be understood that, the term "and/or" in this specification merely describes an association relationship between associated objects, and indicates that three relationships may exist. For example, A and/or B may indicate the following cases: Only A exists, both A and B exist, and only B exists. In addition, the character "/" in this specification generally indicates an "or" relationship between the associated objects.

A person skilled in the art may be aware that units and algorithm steps with reference to the examples described in embodiments disclosed in this specification can be implemented by hardware or a combination of computer software and hardware in this application. Whether a function is performed by hardware or hardware driven by computer software depends on specific applications and design constraint conditions of the technical solutions. A person skilled in the art may use different methods to implement the described functions for each specific application, but it should not be considered that the implementation goes beyond the scope of this application.

In embodiments of this application, the communication device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

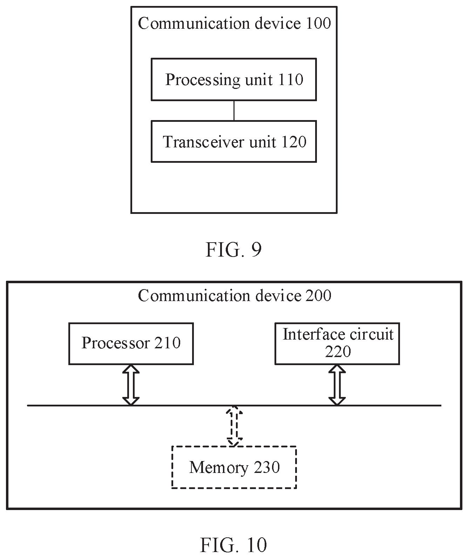

FIG. 9 is a block diagram of a communication device 100 according to an embodiment of this application. As shown in FIG. 9, the communication device 100 may include a processing unit 110 and a transceiver unit 120.

The modules are separately configured to perform steps of the foregoing positioning method 800. Details are not described herein again.

It should be further understood that the communication device 100 herein is presented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The communication device 100 in the foregoing solutions has a function of implementing corresponding steps in the foregoing method 800. The function may be implemented by hardware, or may be implemented by hardware executing corresponding software. The hardware or the software includes one or more modules corresponding to the foregoing function. For example, a determining unit may be replaced with a processor, to separately perform receiving and sending operations and related processing operations in the method embodiments. In addition, the determining unit may be a processing circuit.

It should be noted that the communication device in FIG. 9 may be the communication device in the foregoing method embodiments, or may be a chip or a chip system of the communication device, for example, a system on chip (system on chip, SoC). The processing unit is a processor, a microprocessor, or an integrated circuit that is integrated on the chip. This is not limited herein.

FIG. 10 is a block diagram of another communication device 200 according to an embodiment of this application. As shown in the figure, the device 200 includes at least one processor 210. The processor 210 is coupled to a memory, and is configured to execute a computer program or instructions stored in the memory, to send a signal and/or receive a signal. Optionally, the device 200 further includes a memory 230, configured to store the computer program or the instructions. Optionally, the device 200 further includes a transceiver 220, and the processor 210 controls the transceiver 220 to send a signal and/or receive a signal.

It should be understood that the processor 210 and the memory 230 may be integrated into one processing device. The processor 210 is configured to execute the computer program or the instructions stored in the memory 230, to implement the foregoing functions. During specific implementation, the memory 230 may alternatively be integrated into the processor 210, or may be independent of the processor 210.

It should be further understood that the transceiver 220 may include a transceiver (or referred to as a receive machine) and a transmitter (or referred to as a transmit machine). The transceiver may further include an antenna, and a quantity of antennas may be one or more. The transceiver 220 may be a communication interface or an interface circuit.

Specifically, the processor 210 in the device 200 may correspond to the processing unit 110 in the communication device 100. The transceiver 220 in the device 200 may correspond to the sending unit 120 in the communication device 100.

In a solution, the communication device 200 is configured to implement the steps in the foregoing embodiment of the method 800.

For example, the processor 210 is configured to execute the computer program or instructions stored in the memory 230, to implement the steps in the method 800.

Based on the methods provided in embodiments of this application, this application further provides a computer program product. The computer program product stores a computer program or instructions. When the computer program or the instructions are run on a computer, the computer is enabled to perform the steps in the foregoing embodiment of the method 800.

Based on the methods provided in embodiments of this application, this application further provides a computer-readable medium. The computer-readable medium stores a computer program or instructions. When the computer program or the instructions are run on a computer, the computer is enabled to perform the steps in the method 800.

For interpretations and beneficial effects of the related content in any one of the devices provided above, refer to the corresponding method embodiment provided above. Details are not described herein again.

It should be understood that specific processes in which the transceiver and the processor perform the foregoing corresponding steps are described in detail in the foregoing method embodiments. For brevity, details are not described herein again.

In an implementation process, the steps of the foregoing method may be completed by an integrated logic circuit of hardware in the processor, or a computer program or instructions in a form of software. The steps of the method disclosed with reference to embodiments of this application may be directly performed and completed by a hardware processor, or may be performed and completed by using a combination of hardware in the processor and a software module. The software module may be located in a mature storage medium in the field, for example, a random access memory, a flash memory, a read-only memory, a programmable read-only memory, an electrically erasable programmable memory, or a register. The storage medium is located in the memory, and the processor reads information in the memory and completes the steps of the foregoing methods based on hardware of the processor. To avoid repetition, details are not described herein again.

It should be noted that the processor in embodiments of this application may be an integrated circuit chip and has a signal processing capability. In an implementation process, the steps of the foregoing method embodiments may be completed by an integrated logic circuit of hardware in the processor, or a computer program or instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor, or the like. The steps of the method disclosed with reference to embodiments of this application may be directly performed and completed by a hardware decoding processor, or may be performed and completed by using a combination of hardware in the decoding processor and a software module. The software module may be located in a mature storage medium in the field, for example, a random access memory, a flash memory, a read-only memory, a programmable read-only memory, an electrically erasable programmable memory, or a register. The storage medium is located in the memory, and the processor reads information in the memory and completes the steps of the foregoing methods based on hardware of the processor.

All or some of the foregoing embodiments may be implemented by software, hardware, firmware, or any combination thereof. When embodiments are implemented by software, all or some of embodiments may be implemented in a form of a computer program product. The computer program product includes one or more computer programs or instructions. When the computer program or the instructions are loaded and executed on a computer, all or some of the procedures or functions according to embodiments of this application are generated. The computer may be a general-purpose computer, a dedicated computer, a computer network, or another programmable device. The computer program or the instructions may be stored in a computer-readable storage medium or may be transmitted from a computer-readable storage medium to another computer-readable storage medium. For example, the computer program or the instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

In the foregoing device embodiments, corresponding modules or units perform corresponding steps. For example, the transceiver unit (transceiver) performs a receiving or sending step in the method embodiments, and the processing unit (processor) may perform a step other than the sending and receiving steps. For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application running on the communication device and the communication device may be components. One or more components may reside within a process and/or an execution thread, and a component may be located on one computer and/or distributed between two or more computers. In addition, these components may be executed from various computer-readable media that store various data structures. For example, the components may perform communication through a local and/or a remote process and based on, for example, a signal having one or more data packets (for example, data from two components interacting with another component in a local system, a distributed system, and/or across a network such as the Internet interacting with other systems through a signal).

A person of ordinary skill in the art may be aware that units and algorithm steps with reference to the examples described in embodiments disclosed in this specification can be implemented by electronic hardware or a combination of computer software and electronic hardware. Whether the functions are performed by hardware or software depends on specific applications and design constraint conditions of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed operating process of the foregoing described system, device, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several computer programs or instructions for instructing a computer device (which may be a personal computer, a server, a network device, or the like) to perform all or some of the steps of the methods described in embodiments of this application. The foregoing storage medium includes any medium that can store a computer program or instructions, for example, a USB flash drive, a removable hard disk, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A positioning method, comprising:

   sending configuration information to a first device, wherein the configuration information comprises a time-frequency resource corresponding to a reference signal;
   sending first indication information and second indication information to the first device, wherein the first indication information indicates information about a time window for measuring the reference signal, and the second indication information indicates to measure the reference signal within the time window to determine a carrier phase measurement result;
   receiving the carrier phase measurement result and a time measurement result that are reported by the first device, wherein the time measurement result is determined by measuring the reference signal on the time-frequency resource; and
   determining a location of a terminal device based on the carrier phase measurement result and the time measurement result.

2. The method according to claim 1, wherein the second indication information further indicates to measure the reference signal within the time window to determine the carrier phase measurement result and the time measurement result, wherein the carrier phase measurement result and the time measurement result are determined by measuring the reference signal within the time window on the time-frequency resource.

3. The method according to claim 1, wherein the carrier phase measurement result is determined by measuring the reference signal within the time window on the time-frequency resource.

4. The method according to claim 3, wherein the time measurement result is determined by measuring the reference signal on the time-frequency resource, and the reference signal on the time-frequency resource comprises a reference signal outside the time window.

5. The method according to claim 4, wherein the second indication information further indicates to measure the reference signal on the time-frequency resource to determine the time measurement result.

6. The method according to any one of claims 1 to 5, wherein the second indication information further indicates a measurement quantity within the time window, and the measurement quantity comprises at least one of the following: a reference signal carrier phase RSCP, a reference signal carrier phase difference RSCPD, a relative time of arrival RTOA, a reference signal time difference of arrival RSTD, a receive-transmit time difference of a base station, or a receive-transmit time difference of the terminal device.

7. A positioning method, comprising:

   sending configuration information to a first device, wherein the configuration information comprises a time-frequency resource corresponding to a reference signal;
   sending first indication information and second indication information to the first device, wherein the first indication information indicates information about a time window for measuring the reference signal, and the second indication information indicates to preferentially measure the reference signal within the time window;
   receiving a carrier phase measurement result and a time measurement result that are reported by the first device, wherein the carrier phase measurement result and the time measurement result are determined by measuring a reference signal within the time window and a reference signal outside the time window; and
   determining a location of a terminal device based on the carrier phase measurement result and the time measurement result.

8. The method according to claim 7, wherein the method further comprises:
   sending third indication information to the first device, wherein the third indication information indicates priorities of different resources in measurement of the reference signal within the time window, and/or the third indication information indicates priorities of different resources in measurement of the reference signal outside the time window.

9. The method according to claim 7 or 8, wherein the carrier phase measurement result is determined based on the reference signal measured within the time window, and the time measurement result is determined by measuring the reference signal within the time window and the reference signal outside the time window.

10. The method according to any one of claims 1 to 9, wherein the reference signal comprises a reference signal resource and/or a reference signal resource set.

11. The method according to claim 10, wherein the reference signal resource comprises a sounding reference signal SRS resource and/or a positioning reference signal PRS resource, and the reference signal resource set comprises an sounding reference signal SRS resource set and/or a positioning reference signal PRS resource set.

12. The method according to any one of claims 1 to 11, wherein
   the sending the first indication information and the second indication information to the first device comprises:

   sending a measurement request message to the first device, wherein the measurement request message is used to request to measure the reference signal, and the measurement request message comprises the first indication information and the second indication information; or
   the sending the first indication information and the second indication information to the first device comprises:

      sending a measurement request message to the first device, wherein the measurement request message is used to request to measure the reference signal, and the measurement request message comprises the first indication information; and
      sending an assistance message to the first device, wherein the assistance message comprises the second indication information.

13. The method according to any one of claims 1 to 12, wherein

the carrier phase measurement result comprises: a measurement result of the reference signal carrier phase RSCP and/or a measurement result of the reference signal carrier phase difference RSCPD; and
the time measurement result comprises a measurement result of at least one of the following: the relative time of arrival RTOA, the reference signal time difference of arrival RSTD, the receive-transmit time difference of the base station, or the receive-transmit time difference of the terminal device.

14. The method according to any one of claims 1 to 13, wherein the information about the time window is determined based on the configuration information.

15. A positioning method, comprising:

receiving configuration information from a location management function network element, wherein the configuration information comprises a time-frequency resource corresponding to a reference signal;
receiving first indication information and second indication information from the location management function network element, wherein the first indication information indicates information about a time window for measuring the reference signal, and the second indication information indicates to measure the reference signal within the time window to determine a carrier phase measurement result;
measuring the reference signal based on the configuration information, the first indication information, and the second indication information, and obtaining the carrier phase measurement result and a time measurement result, wherein the time measurement result is determined by measuring the reference signal on the time-frequency resource; and
reporting the carrier phase measurement result and the time measurement result to the location management function network element, wherein the carrier phase measurement result and the time measurement result are used by the location management function network element to determine a location of a terminal device.

16. The method according to claim 15, wherein the second indication information further indicates to measure the reference signal within the time window to determine the carrier phase measurement result and the time measurement result, wherein the carrier phase measurement result and the time measurement result are determined by measuring the reference signal within the time window on the time-frequency resource.

17. The method according to claim 15, wherein the carrier phase measurement result is determined by measuring the reference signal within the time window on the time-frequency resource.

18. The method according to claim 17, wherein the time measurement result is determined by measuring the reference signal on the time-frequency resource, and the reference signal on the time-frequency resource comprises a reference signal outside the time window.

19. The method according to claim 18, wherein the second indication information further indicates to measure the reference signal on the time-frequency resource to determine the time measurement result.

20. The method according to any one of claims 15 to 19, wherein the second indication information further indicates a measurement quantity within the time window, and the measurement quantity comprises at least one of the following: a reference signal carrier phase RSCP, a reference signal carrier phase difference RSCPD, a relative time of arrival RTOA, a reference signal time difference of arrival RSTD, a receive-transmit time difference of a base station, or a receive-transmit time difference of the terminal device.

21. A positioning method, comprising:

receiving configuration information from a location management function network element, wherein the configuration information comprises a time-frequency resource corresponding to a reference signal;
receiving first indication information and second indication information from the location management function network element, wherein the first indication information indicates information about a time window for measuring the reference signal, and the second indication information indicates to preferentially measure the reference signal within the time window;
measuring the reference signal based on the configuration information, the first indication information, and the second indication information, and obtaining the carrier phase measurement result and a time measurement result, wherein the carrier phase measurement result and the time measurement result are determined by measuring a reference signal within the time window and a reference signal outside the time window; and

reporting the carrier phase measurement result and the time measurement result to the location management function network element, wherein the carrier phase measurement result and the time measurement result are used by the location management function network element to determine a location of a terminal device.

22. The method according to claim 21, wherein the method further comprises:

receiving third indication information, wherein the third indication information indicates priorities of different resources in measurement of the reference signal within the time window, and/or the third indication information indicates priorities of different resources in measurement of the reference signal outside the time window; and the measuring the reference signal based on the configuration information, the first indication information, and the second indication information comprises:
measuring the reference signal based on the configuration information, the first indication information, the second indication information, and the third indication information.

23. The method according to claim 21 or 22, wherein the carrier phase measurement result is determined based on the reference signal measured within the time window, and the time measurement result is determined by measuring the reference signal within the time window and the reference signal outside the time window.

24. The method according to any one of claims 21 to 23, wherein the reference signal comprises a reference signal resource and/or a reference signal resource set.

25. The method according to claim 24, wherein the reference signal resource comprises a sounding reference signal SRS resource and/or a positioning reference signal PRS resource, and the reference signal resource set comprises a sounding reference signal SRS resource set and/or a positioning reference signal PRS resource set.

26. The method according to any one of claims 21 to 25, wherein
the receiving the first indication information and the second indication information from the location management function network element comprises:

receiving a measurement request message from the location management function network element, wherein the measurement request message is used to request to measure the reference signal, and the measurement request message comprises the first indication information and the second indication information; or
the receiving the first indication information and the second indication information from the location management function network element comprises:

receiving a measurement request message from the location management function network element, wherein the measurement request message is used to request to measure the reference signal, and the measurement request message comprises the first indication information; and
receiving an assistance message from the location management function network element, wherein the assistance message comprises the second indication information.

27. The method according to any one of claims 21 to 26, wherein

the carrier phase measurement result comprises: a measurement result of a reference signal carrier phase RSCP and/or a measurement result of a reference signal carrier phase difference RSCPD; and
the time measurement result comprises a measurement result of at least one of the following: a relative time of arrival RTOA, a reference signal time difference of arrival RSTD, a receive-transmit time difference of a base station, or a receive-transmit time difference of the terminal device.

28. The method according to any one of claims 21 to 27, wherein the information about the time window is determined based on the configuration information.

29. A communication device, configured to implement the method according to any one of claims 1 to 14, or configured to implement the method according to any one of claims 15 to 28.

30. A communication device, comprising:
a processor, wherein the processor is configured to execute a computer program or instructions in a memory, to perform the method according to any one of claims 1 to 14, or configured to implement the method according to any one of claims 15 to 28.

31. A communication system, comprising a communication device configured to perform the method according to any one of claims 1 to 14, and a communication device configured to perform the method according to any one of claims 15 to 28.

32. A computer-readable storage medium, wherein the computer-readable storage medium stores a computer program or instructions, and when the computer program or the instructions are run on a computer, the computer is enabled to perform the method according to any one of claims 1 to 28.

33. A computer program product, comprising a computer program or instructions, and when the computer program or the instructions are run on a computer, the computer is enabled to perform the method according to any one of claims 1 to 28.

Base station 2

SRS

SRS

Base station 1

UE

SRS

Reference
base station

FIG. 1

*d*

Base
station

*N*

UE

*φ*

FIG. 2

FIG. 3

Time window #1                    Time window #2

FIG. 4

FIG. 5

FIG. 6A

FIG. 6B

FIG. 7

Method 800

```
┌─────────────────┐                                    ┌──────────┐
│   LMF network   │                                    │   First  │
│     element     │                                    │  device  │
└─────────────────┘                                    └──────────┘
┌ ─ ─ ─ ─ ─ ─ ─ ─ ─ ─ ─ ─ ─ ┐
│  810: The LMF network element  │
│ obtains configuration information of │
│        a reference signal        │
└ ─ ─ ─ ─ ─ ─ ─ ─ ─ ─ ─ ─ ─ ┘
```

820: The LMF network element sends the
configuration information to the first device

830: The LMF network element sends first
indication information and second indication
information to the first device, where the first
indication information indicates information
about a time window for measuring the reference
signal, and the second indication information
indicates to measure the reference signal within
the time window to determine a carrier phase
measurement result

840: The first device measures the
reference signal based on the
configuration information, the first
indication information, and the second
indication information, and determines
the carrier phase measurement result
and a time measurement result

850: The first device reports the carrier
phase measurement result and the time
measurement result to the LMF network
element

860: The LMF network element
determines a location of a terminal
device based on the carrier phase
measurement result and the time
measurement result

FIG. 8

Communication device 100

Processing unit 110

Transceiver unit 120

FIG. 9

Communication device 200

Processor 210

Interface circuit 220

Memory 230

FIG. 10

## INTERNATIONAL SEARCH REPORT

| International application No. |
|---|
| **PCT/CN2024/120536** |

### A. CLASSIFICATION OF SUBJECT MATTER

H04W 4/02(2018.01)i

According to International Patent Classification (IPC) or to both national classification and IPC

### B. FIELDS SEARCHED

Minimum documentation searched (classification system followed by classification symbols)

IPC:H04W,H04Q,H04L

Documentation searched other than minimum documentation to the extent that such documents are included in the fields searched

Electronic data base consulted during the international search (name of data base and, where practicable, search terms used)

WPABS, CNTXT, DWPI, ENTXT, VEN, CJFD, 3GPP: 定位, 配置, 信息, 参考, 信号, 对应, 指示, 测量, 时间窗, 载波, 相位, 结果, 时频, 资源, 请求, 时间差, RSCP, RTOA, RSTD, positioning, locate, configuration, information, reference, signal, correspondence, indication, measurement, time window, carrier, phase, result, time-frequency, resource, request, time difference

### C. DOCUMENTS CONSIDERED TO BE RELEVANT

| Category* | Citation of document, with indication, where appropriate, of the relevant passages | Relevant to claim No. |
|---|---|---|
| Y | CN 112930484 A (MITSUBISHI ELECTRIC CORP.) 08 June 2021 (2021-06-08) description, paragraphs 43-179 | 1-3, 6, 15-17, 20, 29-33 |
| Y | CN 116419155 A (SONY GROUP CORP.) 11 July 2023 (2023-07-11) description, paragraphs 30-254 | 1-3, 6, 15-17, 20, 29-33 |
| A | CN 115561779 A (BEIJING PONY.AI TECHNOLOGY CO., LTD.) 03 January 2023 (2023-01-03) entire document | 1-33 |
| A | CN 112839311 A (NANJING UNIVERSITY OF SCIENCE AND TECHNOLOGY) 25 May 2021 (2021-05-25) entire document | 1-33 |
| A | US 2023030759 A1 (QUALCOMM INC.) 02 February 2023 (2023-02-02) entire document | 1-33 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 October 2024** | **02 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/120536**

| Patent document cited in search report | | | Publication date (day/month/year) | Patent family member(s) | | | Publication date (day/month/year) |
|---|---|---|---|---|---|---|---|
| CN | 112930484 | A | 08 June 2021 | US | 2020132861 | A1 | 30 April 2020 |
| | | | | US | 11079495 | B2 | 03 August 2021 |
| | | | | EP | 3665510 | A1 | 17 June 2020 |
| | | | | EP | 3665510 | B1 | 28 July 2021 |
| | | | | WO | 2020090138 | A1 | 07 May 2020 |
| | | | | JP | 2021532373 | A | 25 November 2021 |
| | | | | JP | 7050999 | B2 | 08 April 2022 |
| CN | 116419155 | A | 11 July 2023 | None | | | |
| CN | 115561779 | A | 03 January 2023 | None | | | |
| CN | 112839311 | A | 25 May 2021 | None | | | |
| US | 2023030759 | A1 | 02 February 2023 | US | 11765769 | B2 | 19 September 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311282030